Europäisches Patentamt

European Patent Office

Office européen des brevets

(19)

(11) Veröffentlichungsnummer: **0 061 136**
**B1**

(12) **EUROPÄISCHE PATENTSCHRIFT**

(45) Veröffentlichungstag der Patentschrift:
04.09.85

(21) Anmeldenummer: **82102152.4**

(22) Anmeldetag: **17.03.82**

(51) Int. Cl.⁴: **B 60 C 19/00,** B 60 B 11/06

(54) **Vorrichtung zur Überbrückung des gegenseitigen Abstands einander benachbarter Reifen.**

(30) Priorität: 21.03.81 DE 3111191

(43) Veröffentlichungstag der Anmeldung:
29.09.82 Patentblatt 82/39

(45) Bekanntmachung des Hinweises auf die Patenterteilung:
04.09.85 Patentblatt 85/36

(84) Benannte Vertragsstaaten:
AT BE CH DE FR GB IT LI LU NL SE

(56) Entgegenhaltungen:
DE - A - 1 802 772
DE - A - 2 940 834
DE - U - 7 298 659
DE - U - 7 737 035
FR - A - 1 257 521
GB - A - 4 531
US - A - 1 998 415

(73) Patentinhaber: **Reifen-Ihle GmbH, Schreberstrasse 7,
D-8870 Günzburg (DE)**

(72) Erfinder: **Ihle, Johann, Schreberstrasse 7,
D-8870 Günzburg (DE)**

(74) Vertreter: **Munk, Ludwig, Dipl.-Ing.,
Prinzregentenstrasse 1, D-8900 Augsburg (DE)**

ACTORUM AG

## Beschreibung

Die Erfindung betrifft eine Vorrichtung zur Überbrückung des gegenseitigen Abstands einander benachbarter Reifen für mehrfach bereifte Fahrzeuge, insbesondere zwillingsbereifte Baustellenfahrzeuge, mit mindestens einem zwischen die einander jeweils benachbarten Reifen einsetzbaren, mit seinen Flanken hieran zur Anlage kommenden Zwischenring, der auf einem Zwischenringträger aufgenommen ist, der zwischen die einander jeweils zugewandten Felgenhörner der die Reifen aufnehmenden Felgen aufgesetzt ist und in radialer Richtung an den seine Randzonen übergreifenden Flanschen der beiden Felgenhörner abgestützt ist.

Eine Anordnung dieser Art ist aus der DE-U-7 928 659 bekannt. Bei dieser bekannten Anordnung ist der Zwischenringträger als aus einem verhältnismässig dünnen, federnden Blech bestehendes Federelement ausgebildet, das etwa U-förmigen Querschnitt aufweist und mit seitlichen Randklauen unter Vorspannung an den Flanschen der Felgenhörner einrasten soll. Nachteilig ist hierbei nicht nur, dass die Tragfähigkeit eines derartigen Blechformlings sehr begrenzt ist, sondern vor allem, dass ein derartiges Federelement bei der Radmontage in axialer Richtung zusammengedrückt werden muss, was die Montage- bzw. Demontagearbeiten erschweren und gleichzeitig zu einer Gefahrenquelle werden kann, weil die Axialkraft des zusammengedrückten Federelements eine Sprengwirkung ausüben kann, durch die es bei der Demontage eines Rads zu Unfällen kommen kann. Ganz abgesehen davon erfordert jedoch ein ringförmiges Federelement mit U-förmigem Querschnitt einen hohen Herstellungsaufwand. Ein derartiges Federelement ermöglicht zwar auch einen gewissen Ausgleich von Abstandsänderungen zwischen den einander benachbarten Felgen. Die zulässigen Abstandsänderungen sind jedoch verhältnismässig gering, weil einerseits eine gewisse Mindestvorspannung benötigt wird und andererseits der Anstieg der beim Zusammendrücken wirksam werdenden Federkraft ebenfalls eine Grenze setzt. Ausserdem ist zu befürchten, dass sich hierbei der Radius des ringförmigen Blechformlings in Abhängigkeit von der seitlichen Einspannung ändert, weil sich der die seitlichen Schenkel verbindende Steg je nach Spannweite mehr oder weniger durchwölbt. Dies kann dazu führen, dass die Bewegbarkeit des Zwischenrings in axialer Richtung aufgehoben wird, was eine Selbstzentrierung und -einstellung des Zwischenrings unmöglich macht. Ausserdem kann es hierbei vorkommen, dass die Rastklauen des den Zwischenringträger bildenden Blechformlings aufgrund radialer Zwangskräfte aus ihrer Verrastung herausgerissen werden. Die bekannte Anordnung erweist sich somit insbesondere als nicht einfach, funktionssicher und universell genug.

Hiervon ausgehend ist es daher die Aufgabe der vorliegenden Erfindung, unter Vermeidung der Nachteile der bekannten Anordnungen eine Vorrichtung eingangs erwähnter Art so zu verbessern, dass nicht nur ein einfacher Aufbau, sondern auch eine einfache Anpassung des Zwischenringträgers an unterschiedliche Felgenabstände innerhalb eines grossen Bereichs und eine Selbsteinstellung des Zwischenrings gewährleistet sind.

Diese Aufgabe wird erfindungsgemäss dadurch gelöst, dass der Zwischenringträger als in seiner Breite einstellbare Büchse ausgebildet ist, die aus zwei teleskopartig ineinander eingreifenden Teilen besteht, wobei auf das Innenteil eine umlaufende, seitlich auskragende Randleiste mit dem Aussendurchmesser des Aussenteils entsprechendem Aussendurchmesser aufgesetzt ist, an welcher das Aussenteil mittels mindestens eines Abstandhalters in axialer Richtung abgestützt ist.

Die den Zwischenring aufnehmende, in axialer Richtung sich erstreckende Büchse schafft einen ihrer lichten Weite entsprechenden Freiraum, durch welchen das Ventil des Innenrads über die zugeordneten, innerhalb der Büchse angeordneten Durchgriffsöffnungen im Bereich der Felgenschüssel einwandfrei erreichbar ist. Der Einfluss einer Drehung des Zwischenrings und/oder der Büchse relativ zu den benachbarten Reifen ist somit eliminiert. Die axiale Lage der den Zwischenring aufnehmenden Büchse ist durch die seitlichen Felgenhörner fixiert. Die nach aussen gebogenen Flansche der umlaufenden Felgenhörner ergeben eine zuverlässige Lagesicherung und Abstützung der Büchse in radialer Richtung. Mit der den Zwischenring aufnehmenden Büchse wird der Abstand zwischen den einander benachbarten Felgenhörnern vollständig überbrückt. Der Zwischenring kann sich daher unabhängig von der Lage der Stossfuge der zugeordneten Felgenblätter durch Verschieben gegenüber der Büchse auf die gewünschte Mittellage zwischen den beiden einander benachbarten Reifen einstellen. Die Büchse ihrerseits liegt dabei unabhängig von der Lage der Stossfuge der beiden Felgenblätter mit ihren beiden axialen Randkanten am jeweils benachbarten Felgenhorn an. Hierbei ist daher auch bei einem verhältnismässig grossen Abstand zwischen den beiden Reifen sowie auch bei einer verhältnismässig weit ausserhalb der Mittelebene zwischen den beiden Reifen liegenden Stossfuge zwischen den beiden Felgenblättern eine sehr stabile Abstützung des Zwischenrings gewährleistet. Ausserdem wird durch die den Zwischenring aufnehmende Büchse sichergestellt, dass über die felgenschlüsselseitigen Durchgriffsöffnungen zwischen die Felgen eindringende Fremdkörper wie Steine, Sand und dergleichen, nicht zwischen die Reifen und den Zwischenring gelangen können, was sich positiv auf die Lebensdauer dieser Teile auswirkt. Dadurch, dass die Breite der den Zwischenring aufnehmenden Büchse einstellbar ist, ist auf einfache Weise eine Anpassung der Breite des Zwischenrings an verschiedene Felgentypen möglich, so dass man praktisch mit wenigen Standardausführungen auskommt, was eine rationelle Herstellung und Lagerhaltung ermöglicht. Trotz der teleskopartigen Verstellbarkeit der den Zwischenringträger bildenden Büchse ist jedoch sichergestellt, dass im Bereich beider axialer Randkanten der Büchse derselbe wirksame Durchmesser vorhanden ist, was eine gleichmässige Anlage im Bereich beider Randkanten gewährleistet. Gleichzeitig bieten die erfindungsgemässen Massnahmen die Möglichkeit, den Zwischenring auf der gesamten Breite seines inneren Umfangs satt abzustützen.

In Fortbildung der übergeordneten Massnahmen kann als Abstandshalter ein Satz von Distanzringen vorgesehen sein, die wahlweise einzeln oder insgesamt abnehmbar sind. Hierbei ist es in vorteilhafter Weise möglich, durch Kombination der Distanzringe praktisch jede gewünschte Breite der den Zwischenring aufnehmenden Büchse einzustellen.

Weitere zweckmässige Ausgestaltungen und vorteilhafte Weiterbildungen der übergeordneten Massnahmen ergeben sich aus der nachstehenden Beschreibung eines Ausführungsbeispiels anhand der Zeichnung in Verbindung mit den restlichen Unteransprüchen.

In der Zeichnung zeigen:

Fig. 1 eine schematische Schnittdarstellung eines Zwillingsrads mit verschiedenen Felgen und einem den Abstand zwischen den beiden Reifen überbrückenden Zwischenring und

Fig. 2 einen Schnitt durch die zur Aufnahme des Zwischenrings vorgesehene Büchse.

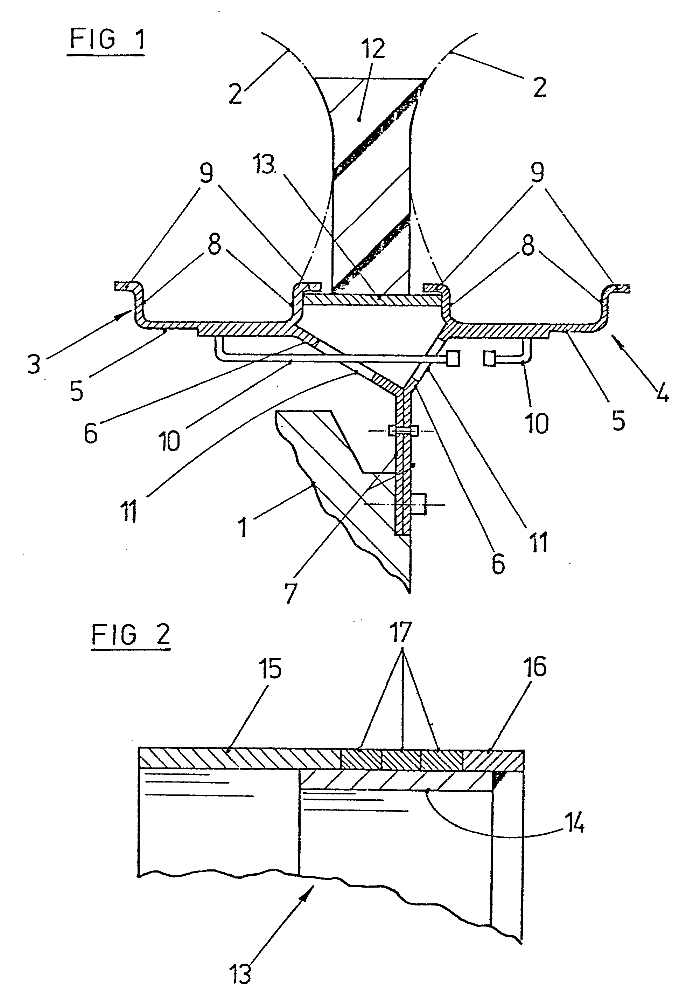

Der Aufbau eines Zwillingsrads ist an sich bekannt und bedarf daher im vorliegenden Zusammenhang keiner ausführlichen Schilderung. Das in Fig. 1 dargestellte Zwillingsrad besteht aus einer an einer Nabe 1 festgelegten Doppelfelge zur Aufnahme von zwei einander benachbarten Reifen 2, die in Fig. 1 lediglich durch ihre Umfangskontur angedeutet sind. Die Doppelfelge ist aus zwei aneinander festgelegten Felgen 3 und 4 zusammengesetzt. Jede Felge 3 bzw. 4 besteht aus einer Radaufnahme 5, die über eine seitlich auskragende Felgenschüssel 6 mit einem in radialer Richtung sich erstreckenden Felgenblatt 7 verbunden ist. Die aneinander anliegenden Felgenblätter 7 sind mit der Nabe 1 verschraubt. Die Reifenaufnahme 5 der Felgen 3 und 4 ist mit zwei seitlichen Felgenhörnern 8 versehen, die abnehmbar oder starr angeordnet sein können und deren radial äussere Enden als nach aussen umgebogene Randflansche 9 ausgebildet sind. Den Reifen 2 sind die Reifenaufnahmen 5 in radialer Richtung durchsetzende Ventile 10 zugeordnet, die von der Radaussenseite her über im Bereich der Felgenschüsseln 6 vorgesehene Durchgriffsöffnungen 11 erreichbar sind. Im dargestellten Ausführungsbeispiel ist das dem Reifen 2 des inneren Rads der Zwillingsanordnung zugeordnete Ventil 10 einfach durch die Durchgriffsöffnungen 11 hindurchgesteckt.

Die die Doppelfelge bildenden Felgen 3 und 4 können spiegelbildlich ausgebildet sein, so dass sich eine symmetrische Doppelfelge ergibt. Dem dargestellten Ausführungsbeispiel liegt eine asymmetrische Doppelfelge zugrunde, bei der die Felgenschüsseln 6 der beiden Felgen 3 und 4 ungleich weit seitlich auskragen, so dass die Stossfuge zwischen den beiden Felgenblättern 7 in axialer Richtung gegenüber der Mitte zwischen den beiden Reifen 2 versetzt ist. Eine derartige Felgenausbildung ist vielfach aus Gründen einer erhöhten Standfestigkeit erwünscht. Die Lücke zwischen den beiden Reifen 2 ist, wie Fig. 1 weiter erkennen lässt, durch einen zwischen die beiden Reifen 2 eingesetzten, ein etwa stollenförmiges Profil aufweisenden Zwischenring 12 überbrückt, der verhindert, dass Fremdkörper, wie Steine, Sand und dergleichen, in die Lücke zwischen den beiden Reifen 2 eindringen können, was sich schonend auf das Reifenmaterial 2 auswirkt und insbesondere bei Baustellenfahrzeugen sicherstellt, dass beim Verlassen der Baustelle kein Schmutz in nennenswertem Umfang auf die Strasse geschleppt wird. Die Kontur der seitlichen Flanken des Zwischenrings 12 kann zweckmässig der seitlichen Kontur der Reifen 2 angepasst sein. Der Zwischenring 12 soll im dargestellten Ausführungsbeispiel als Vollgummiring ausgebildet sein. In manchen Fällen kann es sich als zweckmässig erweisen, in radialer Richtung sich erstreckende Verstärkungseinlagen einzuvulkanisieren.

Der Zwischenring 12 ist, wie Fig. 1 weiter erkennen lässt, mit seinem inneren Umfang auf einer in axialer Richtung sich erstreckenden Büchse 13 aufgenommen, die sich zwischen den beiden inneren Felgenhörnern 8 der Felgen 3 und 4 befindet und in axialer Richtung hieran fixiert ist. Der Durchmesser der Büchse 13 ist so bemessen, dass sie mit ihren beiden Endbereichen in radialer Richtung an den nach aussen umgebogenen, umlaufenden Randflanschen 9 der inneren Felgenhörner 8 abstützbar ist. Im Belastungsfalle werden die auf den Zwischenring 12 wirkenden Stützkräfte hierbei von der Büchse 13 praktisch gewölbebogenartig auf die Felgen 3 und 4 übertragen. Die Felgenhörner verlaufen in der Praxis leicht geschwungen nach aussen. Der Aussendurchmesser der Büchse 13 besitzt daher gegenüber dem maximalen Innendurchmesser im Bereich der Flansche 9 leichtes Untermass, so dass sich auf beiden Seiten der Büchse 13 eine ausreichende Stützbreite ergibt. Der Innendurchmesser des Zwischenrings 12 ist so bemessen, dass der Innenring 12 stramm auf der Büchse 13 sitzt, jedoch in axialer Richtung verschiebbar ist. Die Büchse 12 schafft innerhalb ihres inneren Umfangs in erwünschter Weise Freiraum für Armaturen, wie die Ventile 10. Da hierbei der Zwischenring 9 und die diesem zugeordnete Büchse 13 sich radial ausserhalb des Ventilbereichs befinden, spielt es für die Betriebssicherheit keine Rolle, ob der Zwischenring 12 und die Büchse 13 während des Betriebs wandern oder nicht. Gleichzeitig ist hierbei sichergestellt, dass über die Durchgriffsöffnungen 11 eindringende Fremdkörper von der Büchse 13 zurückgehalten werden und daher nicht zwischen die Reifen 2 und den Zwischenring 12 gelangen können, was sich weiter positiv auf die erzielbare Lebensdauer der Reifen 12 auswirkt.

Der Zwischenring 12 wird auf der Büchse 13 so verschoben, etwa mit Hilfe eines Hammers, dass er eine mittlere Lage einnimmt und an beiden Reifen 2 gleichmässig anliegt. Im dargestellten Ausführungsbeispiel ist die Mittelebene des Zwischenrings 12 dabei gegenüber der Stossfuge zwischen den beiden Scheibenblättern 7 in axialer Richtung versetzt. Unabhängig davon werden dabei jedoch die auf den Zwischenring wirkenden und von der Büchse aufgenommenen Stützkräfte infolge der beidseitigen Abstützung der Büchse 13 gleichmässig auf beide Felgen 3 und 4 übertragen.

Zur Anpassung der Büchsenbreite an unterschiedliche Felgenausführungen bzw. unterschiedliche Radaufnahmenabstände soll die Büchse 13 hier hinsichtlich ihrer Breite einstellbar sein, so dass man praktisch mit einer oder wenigen Standardbüchsen sämtliche Felgenausführungen bedienen kann, was eine ausgezeichnete Wirtschaftlichkeit gewährleistet. Hierzu ist die Büchse 13, wie in Fig. 2 näher dargestellt ist, zweiteilig ausgeführt. Die Büchse 13 besteht dabei aus einem Innenteil 14 und einem Aussenteil 15, die teleskopartig ineinander eingreifen und zur Einstellung der gewünschten Breite mehr oder weniger zusammengeschoben bzw. auseinandergezogen werden können. Es ist daher ein geeigneter Verschiebesitz vorzusehen. Zur Gewährleistung gleicher Durchmesserverhältnisse im Bereich beider Enden der beidseitig gleichmässig am jeweils zugeordneten Flansch 9 abgestützten Büchse 13 ist auf das Innenteil 14 eine umlaufende, seitlich auskragende Randleiste 16 aufgesetzt, die denselben Aussendurchmesser wie das Aussenteil 15 aufweist. Im dargestellten Ausführungsbeispiel ist die Randleiste 16 einfach als auf das Innenteil 14 aufgezogener und hiermit verschweisster Ring ausgebildet.

Die Innenkante der umlaufenden Randleiste 16 des Innenteils 14 bildet gleichzeitig einen Axialantrag für das Aussenteil 15. In Fig. 2 ist das Aussenteil 15 durch Abstandshalter bildende Distanzringe 17 von der umlaufenden Randleiste 16 distanziert. Durch Abnahme oder Einsetzen von einem bzw. mehreren dieser Distanzringe 17 ist die Breite der zweiteiligen Büchse 13 variabel. Zweckmässig kann dabei die Büchse 13 bei der Lieferung mit einem Distanzringesatz bestückt sein, der komplett zur Einstellung der grössten Büchsenbreite ausreicht. Durch Herausnehmen einer oder mehrerer Distanzringe kann somit praktisch jede gewünschte Breite eingestellt werden. Die geringste Breite ergibt sich, wenn lediglich das Aussenteil 15 verwendet wird. Diese Art der Breiteneinstellung mit Hilfe von Distanzringen 17 ermöglicht lediglich eine stufige Breitenanpassung. Die Breite der Distanzringe 17 kann jedoch in vorteilhafter Weise entsprechend der gewünschten Stufengrösse gewählt werden. Im dargestellten Ausführungsbeispiel besitzen sämtliche Distanzringe 17 gleiche Breite. Es wäre aber auch denkbar, unterschiedlich breite Distanzringe vorzusehen, so dass durch unterschiedliche Distanzringkombinationen eine quasi stufenlose Breiteneinstellung erreichbar wäre. Die Breite des äusseren Teils 15 ist zweckmässig um die Breite eines Distanzrings 17 grösser als die von der umlaufenden Randleiste 16 begrenzte Eingriffsbreite des Innenteils 14. Die Breite der Randleiste 16 kann ebenfalls in der Grössenordnung der Breite eines Distanzrings 17 liegen, so dass eine gleichmässige Abstufung von der grösstmöglichen Büchsenbreite bis herab zu der durch die einfache Breite des Aussenteils 15 sich ergebenden kleinsten Büchsenbreite möglich ist. Der Innendurchmesser der Distanzringe 17 ist so bemessen, dass diese leicht auf das Innenteil 14 aufgeschoben bzw. von diesem abgenommen werden können. Der Aussendurchmesser der Distanzringe 17 entspricht dem Aussendurchmesser des Aussenteils 15 und der Randleiste 16, so dass dem Zwischenring 12 auf der gesamten Breite seines Innenumfangs eine gleichmässige, durchgehende Auflagefläche zur Verfügung steht. Die zweiteilige Büchsenausführung mit teleskopartig ineinander eingreifenden Teilen ergibt gleichzeitig eine mechanische Versteifung im besonders biegegefährdeten mittleren Bereich. Es ist dabei lediglich darauf zu achten, dass das Innenteil 14 und das Aussenteil 15 einander in jeder Stellung genügend weit übergreifen. Die Büchsenbauteile in Form des Innenteils 14, des Aussenteils 15, der Randleiste 16 und der Distanzringe 17 können einfach als Rohrabschnitte oder entsprechende Biegeteile ausgebildet sein.

**Patentansprüche**

1. Vorrichtung zur Überbrückung des gegenseitigen Abstands einander benachbarter Reifen für mehrfach bereifte Fahrzeuge, insbesondere zwillingsbereifte Baustellenfahrzeuge, mit mindestens einem zwischen die einander jeweils benachbarten Reifen (2) einsetzbaren, mit seinen Flanken hieran zur Anlage kommenden Zwischenring (12), der auf einem Zwischenringträger aufgenommen ist, der zwischen die einander jeweils zugewandten Felgenhörner (8) der die Reifen (2) aufnehmenden Felgen (3, 4) eingesetzt ist und in radialer Richtung an den seine Randzonen übergreifenden Flanschen (9) der beiden Felgenhörner (8) abgestützt ist, dadurch gekennzeichnet, dass der Zwischenringträger als in seiner Breite einstellbare Büchse (13) ausgebildet ist, die aus zwei teleskopartig ineinander eingreifenden Teilen (14, 15) besteht, wobei auf das Innenteil (14) eine umlaufende, seitlich auskragende Randleiste (16) mit dem Aussendurchmesser des Aussenteils (15) entsprechendem Aussendurchmesser aufgesetzt ist, an welcher das Aussenteil (15) mittels mindestens eines Abstandhalters in axialer Richtung abgestützt ist.

2. Vorrichtung nach Anspruch 1, dadurch gekennzeichnet, dass der Aussendurchmesser der Büchse (13) gegenüber dem grössten Innendurchmesser der nach aussen gebogenen Felgenhornflansche (9) leichtes Untermass besitzt.

3. Vorrichtung nach einem der vorhergehenden Ansprüche 1 oder 2, dadurch gekennzeichnet, dass der Zwischenring (12) auf der Büchse (13) in axialer Richtung verschiebbar ist.

4. Vorrichtung nach einem der vorhergehenden Ansprüche, dadurch gekennzeichnet, dass der Zwischenring (12) als vorzugsweise mit Verstärkungseinlagen versehener Vollgummiring ausgebildet ist.

5. Vorrichtung nach einem der vorhergehenden Ansprüche, dadurch gekennzeichnet, dass der Aussendurchmesser des das Aussenteil (15) abstützenden Abstandhalters dem Aussendurchmesser des Aussenteils (15) entspricht.

6. Vorrichtung nach einem der vorhergehenden Ansprüche, dadurch gekennzeichnet, dass als Abstandhalter ein Satz von Distanzringen (17) vorgesehen ist, die wahlweise einzeln oder in Kombination bzw. unter Kombination abnehmbar sind.

7. Vorrichtung nach Anspruch 6, dadurch gekennzeichnet, dass die Distanzringe (17) gleiche Breite aufweisen.

8. Vorrichtung nach Anspruch 7, dadurch gekennzeichnet, dass die Distanzringe (17) unterschiedliche Breite aufweisen.

9. Vorrichtung nach einem der vorhergehenden Ansprüche 6 bis 8, dadurch gekennzeichnet, dass die Breite des Aussenteils (15) um die mittlere Breite eines Distanzrings (17) grösser als die von der umlaufenden Randleiste (16) nicht besetzte Breite des Innenteils (14) ist.

**Claims**

1. In a device for bridging the mutual space between adjacent tyres of multiply tyred vehicles, in particular twin tyred building site vehicles, with at least one intermediate ring (12) insertable between each of the adjacent tyres (2) and the sides of which are in contact therewith, said ring being supported on an intermediate ring support which is inserted between each of the rim horns (8) facing each other of the rims (3, 4) supporting the tyres (2) and which, in radial direction, is supported on the flanges (9) of the two rim horns (8) overlapping its peripheral zones, characterized in that the intermediate ring support is in the form of a bushing (13) with adjustable width which consists of two parts (14, 15) sliding over each other telescope-like, with the inner part (14) having attached to it a surrounding and sideways projecting ledge (16) the outside diameter of which corresponds to the outside diameter of the outer part (15) and on which the outer part (15) is supported in axial direction by means of at least one spacer.

2. A device as claimed in claim 1 characterized in that the outside diameter of the bushing (13) is slightly undersized in relation to the greatest inside diameter of the rim horn flange (9) bent outwardly.

3. A device as claimed in anyone of the preceding claims 1 or 2 characterized in that the intermediate ring (12) can be moved on the bushing (13) in axial direction.

4. A device as claimed in anyone of the preceding claims characterized in that the intermediate ring (12) is in the form of a solid rubber ring which is preferably provided with reinforcing strengtheners.

5. A device as claimed in anyone of the preceding claims characterized in that the outside diameter of the spacer supporting the outer part (15) corresponds to the outside diameter of the outer part.

6. A device as claimed in anyone of the preceding claims characterized in that the spacer is made up of a set of spacer rings (17) which alternatively can be taken off single or in combination or under combination respectively.

7. A device as claimed in claim 6 characterized in that the spacer rings (17) are of equal width.

8. A device as claimed in claim 7 characterized in that the spacer rings (17) are of different width.

9. A device as claimed in anyone of the preceding claims 6 to 8 characterized in that the width of the outer part (15) is greater by the mean width of a spacer ring (17) than the width of the inner part (14) which is not covered by the surrounding ledge.

**Revendications**

1. Dispositif de pontage de l'espacement entre deux pneumatiques jumelés, pour véhicules à plusieurs pneus, en particulier les véhicules de chantier dotés de pneumatiques jumelés, avec au moins un bandage intercalaire (12) pouvant être logé entre les deux pneumatiques jumelés (2) sur les flancs desquels il s'appuie et placé sur un support de bandage intercalaire, situé entre les rebords contigus (8) des jantes (3 et 4) sur lesquelles sont montés les pneumatiques (2) et posant dans le sens radial sur les extrémités coudées (9) des deux rebords de jantes (8) qui vont au-delà des limites du support de bandage intercalaire, caractérisé en ce que le support de bandage intercalaire est conçu comme une douille (13) réglable en largeur, composée de deux parties (14 et 15) s'emboîtant de façon télescopique avec, placée sur la partie interne (14), une bordure continue en saillie latérale (16) d'un diamètre extérieur correspondant au diamètre extérieur de la partie externe (15), bordure sur laquelle s'appuie la partie externe (15) à l'aide d'au moins un écarteur placé dans le sens axial.

2. Dispositif selon la revendication 1, caractérisé en ce que le diamètre extérieur de la douille (13) est légèrement inférieur au diamètre intérieur maximal des extrémités coudées vers l'extérieur (9) des rebords de jantes.

3. Dispositif selon l'une des revendications 1 ou 2, caractérisé en ce que le bandage intercalaire (12) peut être décalé axialement sur la douille (13).

4. Dispositif selon l'une des revendications précédentes, caractérisé en ce que le bandage intercalaire (12) est conçu avantageusement sous forme de bandage en caoutchouc plein, pourvu de renforcements.

5. Dispositif selon l'une des revendications précédentes, caractérisé en ce que le diamètre extérieur de l'écarteur s'appuyant sur la partie externe (15) de la douille correspond au diamètre extérieur de la partie externe (15).

6. Dispositif selon l'une des revendications précédentes, caractérisé en ce que l'écarteur est conçu comme un jeu de bagues d'écartement (17) pouvant être enlevées une à une ou plusieurs à la fois.

7. Dispositif selon la revendication 6, caractérisé en ce que les bagues d'écartement (17) ont la même largeur.

8. Dispositif selon la revendication 6, caractérisé en ce que les bagues d'écartement (17) sont de largeur différente.

9. Dispositif selon l'une des revendications 6 à 8, caractérisé en ce que la largeur de la partie externe (15) de la douille est supérieure, à concurrence de la largeur moyenne d'une bague d'écartement (17), à la largeur de la partie interne (14) non occupée par la bordure continue (16).

FIG 1

FIG 2